# EUROPÄISCHE PATENTSCHRIFT

(11) **EP 0 655 294 B1**
(45) Veröffentlichungstag und Bekanntmachung des Hinweises auf die Patenterteilung: **02.05.1997**
(21) Anmeldenummer: 94117243.9
(22) Anmeldetag: 02.11.1994
(51) Int. Cl.: B23K 26/02

(54) **Gleichzeitige Temperaturmessungen an Laserschweissnähten mit mindestens zwei Pyrometern und Zuordnung zu Prozessparametern und Nahtqualität**
Process for simultaneously measuring temperatures in a laser seam welding using at least two pyrometers and process parameters treatment and seam quality control
Mesures simultanées de température avec au moins deux pyromètres, lors d'un soudage continu par laser et traitement des paramètres du procédé et examen de la qualité de soudage

(30) Priorität: 30.11.1993 CH 3562/93; 03.10.1994 CH 2975/94
(43) Veröffentlichungstag der Anmeldung: 31.05.1995
(73) Patentinhaber: ELPATRONIC AG, CH-6303 Zug (CH)
(72) Erfinder: Gross, Norbert, CH-8004 Zürich (CH)

(56) Entgegenhaltungen:
- EP-A- 0 452 138
- EP-A- 0 562 492
- DE-A- 4 027 714
- US-A- 4 663 513
- PATENT ABSTRACTS OF JAPAN vol. 13, no. 48 (M-793) 3. Februar 1989 & JP-A-63 256 289 (MATSUSHITA ELECTRIC IND CO) 24. Oktober 1988

## Beschreibung

Die Erfindung betrifft ein Verfahren zur Prozess- und Qualitätskontrolle an lasergeschweissten Stumpfnähten, insbesondere in Feinblechen. Ferner betrifft die Erfindung eine Vorrichtung zur Durchführung des Verfahrens. Mittels pyrometrischer Temperaturmessungen werden charakteristische, prozesssensible Daten ermittelt und für eine Qualitätskontrolle aufbereitet. Durch Setzen von Toleranzgrenzwerten kann damit die Schweissqualität in einem vorgebbaren Rahmen gesichert werden.

In jüngerer Zeit wurde die Verwendbarkeit eines Temperaturwertes dicht hinter der Erstarrungsfront der Schweissung zur Verfahrenskontrolle bekannt und es gelang, dem gemessenen Temperaturwert Prozesskenngrössen wie Laserleistung oder Arbeitsgasdurchfluss zuzuordnen (US-Patent 4,663,513). Der Nachteil dieses Verfahrens ist, dass wichtige Parameter hier als konstant angenommen werden müssen und Aenderungen derselben die Messergebnisse stark verfälschen. So wird z.B. schon bei einem geringen Versatz der Strahlposition keine eindeutige Zuordnung der Messwerte zu Prozesskennwerten mehr erreicht. Da mit diesem Verfahren grundsätzlich nur das Verhalten eines Parameters in bezug auf die durch ihn verursachte Temperaturänderung beurteilt werden kann, ist sein Einsatz als dokumentierbarer Nachweis der Schweissqualität nicht gegeben.

Zum Laserschweissen wurden gekoppelte pyrometrische Messungen bisher nur im Rahmen von Grundlagenuntersuchungen und Parameteroptimierungen eingesetzt. Eine bekannte Anwendung für die Produktion verwendet ein Array von Pyrodetektoren, die gemeinsam auf den Auftreffpunkt des Lasers ausgerichtet sind und deren Signale elektronisch gemittelt werden, um insbesondere bei grossflächigeren Oberflächenbehandlungen zuverlässigere mittlere Oberflächentemperaturen zu generieren (EP 0 562 492).

Bei den heute industriell eingesetzten Verfahren zur Herstellung lasergeschweisster Platinen für den Automobilbau werden "tailored blanks", d.h. vorgeschnittene ebene Bleche unterschiedlicher Dicke und Materialeigenschaften im Stumpfstoss miteinander verschweisst. Im Abkühlbereich hinter der Erstarrungsfront bildet sich eine für die Schweissgeschwindigkeit, Strekkenenergie und Materialpaarung typische Temperaturverteilung aus, die normalwerweise unsymmetrisch zur Nahtmitte verläuft. Die Auswertung nur einer punktuell aufgenommenen Temperatur erlaubt hier keine eindeutige Zuordnung zu Prozesskennwerten.

Grundsätzlich geeignet zur Lösung der Aufgabenstellung sind thermographische Bildanalysen. Der Aufwand bei Kalibration und das Einrichten der Pyrometeranordnung auf neue Materialkombinationen kann mittels Bildverarbeitung wesentlich vereinfacht und verkürzt werden. Durch Filtern der anfallenden Datenmenge bei Aufnahme von Thermogrammen ist es möglich, die beschriebene Pyrometeranordnung vollständig zu simulieren und dieser Anordnung identische Signale zur Auswertung an die nachgeschaltete Messkette zu leiten. Auch können bereits bei Verwenden an sich bekannter Algorithmen aus den zusätzlichen Informationen weitere Aussagen zur Nahtqualität gemacht werden. Dazu ist das Erstellen und Ablegen von Referenzthermogrammen vorteilhaft, der Aufbau selbstlernender Systeme bietet sich hier an.

Die Anwendung diese Methode On-line bedarf jedoch unerwünscht langer Rechenzeiten und ist überdimensioniert, da nur ein kleiner Teil der hiermit gewonnenen Information wirklich zur Prozesskontrolle benötigt wird. Auch stehen die hohen Kosten der wirtschaftlichen Nutzung im Wege.

Der Erfindung liegt somit die Aufgabe zugrunde, ein Verfahren zu schaffen, mit dem mehrere relevante Prozessparameter auf einfache und industriell anwendbare Weise erfasst werden. Diese Aufgabe wird mit den Merkmalen des Anspruchs 1 gelöst. Eine Vorrichtung zur Durchführung des Verfahrens ist gemäss Anspruch 12 definiert.

Es hat sich gezeigt, dass es möglich ist, durch Temperaturmessungen an mindestens zwei definierten Stellen die Verknüpfung zu Prozessgrössen herzustellen und den Prozess transparent zu machen. Dazu werden vorzugsweise schnelle Pyrodetektoren auf definierte Punkte beiderseits der Fügelinie dicht hinter der Erstarrungsfront der Schweisschmelze ausgerichtet. Ein einzelner Messfleck enthält typischerweise eine Fläche von ca. 1 mm².

Die Signale der einzelnen Pyrometer werden mittels einer elektronischen Signalverarbeitung miteinander in Bezug gebracht. Sinnvolle Verknüpfungen wie Summen-, Differenz- oder Quotientenbildung stehen als Standardroutinen zur Verfügung.

Für den Aufbau eines übergreifenden On-Line Kontrollsystems werden zweckmässig die standardmässig vom Laseraggregat gewonnenen Messwerte beigezogen. Durch wiederum logische Verknüpfung können zu quantifizierende Parameter eindeutig identifiziert werden. Beispielsweise ist es nach bisherigem Stand nicht möglich aus einer Temperaturmessung zu unterscheiden, ob eine Leistungsänderung des Lasers oder eine Veränderung der Spaltweite des Stumpfstosses stattfindet.

Da jedoch in praktisch jedem Laser eine kontinuierliche Leistungsmessung vorhanden ist, kann ein Messwertvergleich hier die eindeutige Zuordnung von Temperaturänderungen zur Spaltweitenänderung herstellen. Dies gilt prinzipiell für alle Prozessparameter, die mittels physikalisch unterschiedlicher Methode erfasst werden.

Die wesentlichen Einflussgrössen beim Laserschweissen sind:
Laserparameter: Strahlleistung, Strahldurchmesser, Mode, Divergenz u.a.
Prozessparameter: Schweissgeschwindigkeit, Strahlposition, Gaszufuhr u.a.
Materialparameter: Geometrie, Wärmeleitfähigkeit, Reflektionsverhalten u.a.

In praktischen Anwendungen bleiben eine Reihe dieser Grössen konstant, z.B. werden beim Schweissen mit stationärer Optik Strahldurchmesser, Mode, Divergenz nicht verändert. Auch für die restlichen Grössen wie Leistung, Geschwindigkeit, Strahlposition wird zur Erhöhung der Prozessicherheit Konstanz angestrebt. Da sich diese Parameter im Prozess jedoch mit erheblichen Auswirkungen auf die Schweissqualität verändern können, ist eine Kontrolle hier von grosser Bedeutung.

Das Verhalten einiger Parameter im Prozess wird nachfolgend hinsichtlich der Zugänglichkeit für kontrollierende Messungen im Sinne der Erfindung erläutert.

### 1. Laserleistung

Die im Laser erzeugte optische Leistung kann direkt am Resonator(-endspiegel) kalorimetrich gemessen werden mit Wiederholraten im Hz-Bereich. Soll aus Temperaturmessungen an der Werkstückoberfläche auf Verändungen der Strahlleistung zurückgeschlossen werden, so sind, da hiermit nur die in Wärme umgewandelte eingekoppelte Leistung erfasst wird, die Verluste aus Anlage (Strahlführung) und Prozess (reflektierte, durchgelassene Strahlanteile) in Abzug zu bringen. Hochfrequente Leistungsschwankungen können wegen Dämpfungs- und Ausgleichsvorgängen nicht über diese Temperaturmessungen erfasst werden.

Beim Längsnahtschweissen mit konstant parametriertem Prozessablauf (ohne Aenderungen von Leistung, Geschwindigkeit) bildet sich ein quasistationäres Temperaturfeld um den Schweisspunkt aus. In diesem Feld lassen sich Bereiche auszeichnen, die eine kontinuierliche Temperaturmessung erlauben. Einerseits darf ein solcher Messbereich nicht so nah an der Erstarrungsfront liegen, dass ein übermässig steiler Temperaturgradient innerhalb des Messflecks auftritt, andererseits nicht so weit von der Schmelze entfernt, dass schon ein weitgehender Temperaturausgleich stattfinden konnte. Die Lage diese Messfläche lässt sich in bezug auf den Schweisspunkt definieren, Aenderungen der Blechdicke oder Prozessdaten müssen hierbei berücksichtigt werden.

Das Auftreten eines quasistationären Temperaturfeldes bleibt auch beim Schweissen unterschiedlicher Blechdicken und Materialien erhalten, wenngleich hier eine unsymmetrische Wärmeverteilung erzeugt wird. In diesem Fall ist die Auswertung nur einer Temperaturmessung nicht mehr praktikabel, da selbst kleinste Aenderungen der Strahlposition zu erheblichen Signaländerungen und damit zu Fehlinterpretationen führen. Hier kann durch den Einsatz von zwei Messungen, die in geringem Abstand beiderseits der Nahtmitte vorgenommen werden, eine wesentlich zuverlässigere Leistungsangabe erfolgen.

Vorteilhaft wird bei gleichzeitigem Messen zweier Temperaturen eine Signaladdition vorgenommen, wobei durch den erhöhten Signalabstand die Messempfindlichkeit verbessert wird. Demnach wird zur Bewertung einer Leistungsänderung in der Messdatenauswertung zunächst geprüft ob eine zeitgleiche, gleichsinnige Temperaturänderung auftritt, wonach die Signalsumme mit dem Messwert aus der Laser-Leistungsmessung skaliert und verglichen werden kann.

### 2. Spaltweite

Besonders bei längeren Schweissnähten kann es infolge z.B. ungenügender Kantenqualität oder mangelhafter Einspannung der Teile zu spaltbehaftetem Stumpfstoss kommen. Nach dem Verschweissen liegt hier ein merklicher Nahteinfall vor, der die Schweissqualität beeinträchtigt. Ein Teil der Laserstrahlung tritt durch den Spalt und trägt nicht zur Schmelzbildung bei, die Ausdehnung des Temperaturfeldes nimmt daher ab. Die aufgenommenen Temperaturverläufe entsprechen denjenigen bei einem Leistungsabfall. Auch in diesem Fall kann erst durch Vergleich mit anderen gemessenen Prozessdaten die Evidenz der pyrometrischen Messungen erreicht werden. Ein Spalt ist somit als solcher identifizierbar und quantifizierbar, wenn bei ansonsten konstanten Prozessdaten (Leistung, Geschwindigkeit, Plasmaverhalten) sinkende Temperaturverläufe detektiert werden.

### 3. Strahlposition

Schon bei geringem Auswandern der Strahlposition aus der Fügelinie können Bindefehler entstehen, die einer visuellen Kontrolle nicht zugänglich sind. Mit der Auswertung von Temperaturmessungen beiderseits der Fügelinie ergibt sich eine empfindliche Methode zur kontrollierenden Messung und gegebenenfalls Korrektur des Strahlversatzes. Beim Verschweissen gleicher Fügeteile gibt der aus dem differentiellen Vergleich der Pyrometersignale gewonnene Kurvenverlauf direkt proportional den Strahlversatz quer zur Nahtrichtung wieder, werden unterschiedliche Bleche verschweisst, ist vorgängig eine Normierung der Temperaturverläufe vorzunehmen.

### 4. Schweissfehler

Wegen des geringen Abstands zum Schweisspunkt können auch punktuelle Schweissfehler infolge von z.B. Plasmaaussetzern, Randkerben nachgewiesen werden. Ein bedeutender Vorteil der Anwendung des beschriebenen erfindungsgemässen Verfahrens ist die Tatsache, dass hier mögliche Fehler am Schweissteil selbst erkannt werden. Damit ist auch ein Hilfsmittel zur Beurteilung verschiedener Systeme der Prozessüberwachung gegeben, die hinsichtlich ihrer Relevanz zur Bewertung der Nahtqualität überprüfbar werden.

## Patentansprüche

1. Verfahren zur Prozesskontrolle und/oder Qualitätskontrolle bei der Stumpfnaht-Laserschweissung von Blechen, insbesondere von Feinblechen, wobei an mindestens zwei Stellen hinter der Schweisszone gleichzeitig und beiderseits der Fügelinie die Temperatur gemessen wird.

2. Verfahren nach Anspruch 1, dadurch gekennzeichnet, dass die Temperaturmesswerte verknüpft werden.

3. Verfahren nach Anspruch 2, dadurch gekennzeichnet, dass die Temperaturmesswerte addiert werden.

4. Verfahren nach Anspruch 2, dadurch gekennzeichnet, dass die Temperaturmesswerte voneinander subtrahiert werden.

5. Verfahren nach einem der Ansprüche 1 bis 4, dadurch gekennzeichnet, dass Bleche unterschiedlicher Dicke verschweisst werden.

6. Verfahren nach einem der Ansprüche 1 bis 5, dadurch gekennzeichnet, dass die beiden Temperaturmessungen dicht hinter der Erstarrungsfront erfolgen.

7. Verfahren nach einem der Ansprüche 1 bis 7, dadurch gekennzeichnet, dass die Temperaturmessungen symmetrisch zur Fügelinie erfolgen.

8. Verfahren nach einem der Ansprüche 1 bis 6, dadurch gekennzeichnet, dass die Temperaturmessungen asymmetrisch zur Fügelinie erfolgen.

9. Verfahren nach einem der Ansprüche 1 bis 8, dadurch gekennzeichnet, dass die beiden Temperaturmessungen in gleichem Abstand von der Schweissstelle erfolgen, oder dass die beiden Temperaturmessungen in ungleichem Abstand von der Schweissstelle erfolgen.

10. Verfahren nach Anspruch 1, dadurch gekennzeichnet, dass der Messfleck jeweils ca. 0,5 bis 5 mm Durchmesser aufweist, vorzugsweise 1 mm Durchmesser, oder dass der Messfleck eine Flache von ca. 1 mm² aufweist.

11. Verfahren nach einem der Ansprüche 1 bis 10, dadurch gekennzeichnet, dass die Temperaturmesswerte mit Messwerten der Laserleistung verknüpft oder verglichen werden.

12. Vorrichtung zur Laserschweissung zur Durchführung des Verfahrens nach einem der Ansprüche 1 bis 11, mit mindestens zwei Pyrometern,welche zur Temperaturmessung hinter der Schweisszone beiderseits der Fügelinie der verschweissten Bleche angeordnet sind, sowie einer Signalauswerteinrichtung zur Auswertung der Temperaturmesswerte und deren Zuordnung zu Prozesskenngrössen.

## Claims

1. Process of process control and/or quality control during butt-joint laser-welding of sheet metal, in particular thin metal sheets, measuring simultaneously and on both sides of the seam line the temperature at a minimum of two points behind the welding zone.

2. Process according to Claim 1, **characterised in that** the temperature measuring values are combined.

3. Process according to Claim 2, **characterised in that** the temperature measuring values are added.

4. Process according to Claim 2, **characterised in that** the temperature measuring values are subtracted from each other.

5. Process according to one of Claims 1 to 4, **characterised in that** metal sheets of different gauges are welded together.

6. Process according to one of Claims 1 to 5, **characterised in that** both temperature measurings are carried out closely behind the solidification front.

7. Process according to one of Claims 1 to 7, **characterised in that** the temperature measurings are carried out symmetrically to the seam line.

8. Process according to one of Claims 1 to 6, **characterised in that** the temperature measurings are carried out asymmetrically to the seam line.

9. Process according to one of Claims 1 to 8, **characterised in that** both temperature measurings are carried out at the same distance from the welding point, or both temperature measurings are carried out at an unequal distance from the welding point.

10. Process according to Claim 1, **characterised in that** the measuring area has a respective diameter of approximately between 0.5 and 5 mm, preferably 1 mm diameter, or the measuring area has a surface of approximately 1 mm².

11. Process according to one of Claims 1 to 10, **characterised in that** the temperature measuring values are combined or compared with measuring values of the laser output.

12. Laser-welding apparatus for carrying out the process according to one of Claims 1 to 11, comprising at least two pyrometers which are arranged on both sides of the seam line of welded metal sheets for the purpose of temperature measuring behind the welding zone, and a signal evaluation device for evaluation of temperature measuring values and their association to characteristic process data.

## Revendications

1. Procédé pour le contrôle de processus et/ou le contrôle de qualité lors du soudage en bout, par laser, de tôles, notamment de tôles fines, dans lequel la température est mesurée simultanément en au moins deux emplacements en arrière de la zone de soudage et des deux côtés de la ligne de jonction.

2. Procédé selon la revendication 1, caractérisé en se que les valeurs de mesure de température sont combinées.

3. Procédé selon la revendication 2, caractérisé en ce que les valeurs de mesure de température sont additionnées.

4. Procédé selon la revendication 2, caractérisé en ce que les valeurs de mesure de température sont soustraites l'une de l'autre.

5. Procédé selon l'une des revendications 1 à 4, caractérisé en ce qu'on soude des tôles ayant des épaisseurs différentes.

6. Procédé selon l'une des revendications 1 à 5, caractérisé en ce que les deux mesures de température sont exécutées directement en arrière du front de solidification.

7. Procédé selon l'une des revendication 1 à 6, caractérisé en ce que les mesures de température sont exécutées symétriquement par rapport à la ligne de jonction.

8. Procédé selon l'une des revendication 1 à 6, caractérisé en ce que les mesures de température sont exécutées de façon dissymétrique par rapport à la ligne de jonction.

9. Procédé selon l'une des revendication 1 à 8, caractérisé en ce que les deux mesures de température sont exécutées à la même distance de la zone de soudage ou que les deux mesures de température sont exécutées à des distances différentes de la zone de soudage.

10. Procédé selon la revendication 1, caractérisé en ce que le spot de mesure possède un diamètre compris respectivement entre environ 0,5 et 5 mm, de préférence un diamètre de 1 mm, ou que le spot de mesure possède une surface d'environ 1mm².

11. Procédé selon l'une dès revendications 1 à 10, caractérisé en ce que les valeurs de mesure de température sont combinées ou comparées à des valeurs de mesure de la puissance laser.

12. Dispositif pour le soudage laser pour la mise en oeuvre du procédé selon l'une des revendications 1 à 11, comportant au moins deux pyromètres, qui sont disposés, pour la mesure de température en arrière de la zone de soudage des deux côtés de la ligne de jonction des tôles soudées, ainsi qu'un dispositif d'exploitation des signaux pour exploiter les valeurs de mesure de température et les associer à des valeurs caractéristiques du processus.
